(19) Europäisches Patentamt

European Patent Office

Office européen des brevets

(11) EP 0 745 470 B1

## (12) EUROPÄISCHE PATENTSCHRIFT

(45) Veröffentlichungstag und Bekanntmachung des Hinweises auf die Patenterteilung:
**01.03.2000   Patentblatt 2000/09**

(51) Int Cl.[7]: **B29C 47/86**

(21) Anmeldenummer: **95117378.0**

(22) Anmeldetag: **04.11.1995**

(54) **Durch Strangpressen mit Hilfe eines Extruders hergestellter Profilstab aus einem thermoplastischen Kunststoff der Gruppe Polyolefine**

Extruded polyolefin profile

Profilé extrudé en polyoléfine

(84) Benannte Vertragsstaaten:
**DE ES FR GB IT**

(30) Priorität: **27.05.1995   DE 19519484**

(43) Veröffentlichungstag der Anmeldung:
**04.12.1996   Patentblatt 1996/49**

(73) Patentinhaber: **Technoform Caprano + Brunnhofer oHG**
**34277 Fuldabrück (DE)**

(72) Erfinder: **Brunnhofer, Erwin**
**D-34277 Fuldabrück (DE)**

(74) Vertreter: **Honke, Manfred, Dr.-Ing. et al Patentanwälte**
**Andrejewski, Honke & Sozien,**
**Postfach 10 02 54**
**45002 Essen (DE)**

(56) Entgegenhaltungen:
**GB-A- 1 479 335**

- **VORABDRUCK - ÖFF. JAHRESTAG. ARBEITSGEM. VERSTÄRKTE KUNSTST., Bd. 15, 1978, Seiten 7/1-7/6, XP000671374 OTT, H.-J.: "Wärmeleitfähigkeit von GFK im Temperaturbereich von -180 bis + 140 <SYMBOL**
- **CRYOGENICS, Bd. 13, Nr. 9, 1973, Seiten 550-553, XP000673100 GIANESE, P. ET AL.: "Transmission forces to a cryostat"**

**Beschreibung**

Die Erfindung betrifft einen durch Strangpressen mit Hilfe eines Extruders hergestellten Profilstab aus einem thermoplastischen Kunststoff der Gruppe Polyolefine mit eingemischten Glasfasern, welcher Profilstab, gemessen am fertigen Profilstab mit den eingemischten Glasfasern, einen hohen Elastizitätsmodul E (N/mm$^2$) und quer zur Profilstabachse eine geringe Wärmeleitfähigkeit λ (W/mK) aufweist.

Polyolefine sind besondere Kunststoffe, die z.B. definiert sind in Römpp (1992) 3559 und der dort zitierten Literatur. Der Ausdruck bezeichnet im Rahmen der Erfindung auch Kunststoffmischungen aus Polyolefinen. Glasfasern bezeichnet im Rahmen der Erfindung die in der Kunststofftechnik üblichen Verstärkungsfasern oder Bewehrungsfasern in Form von Vollfasern, insbes. sog. Textilglasfasern, wie sie in Gächter/ Müller "Kunststoff-Additive" Carl Hanser Verlag, 3. Ausgabe 1990, S. 620 bis 639, beschrieben sind. Insbesondere kann es sich um Textilglasfasern im Durchmesserbereich von 10 bis 20 μm, vorzugsweise von 14 bis 17 μm, handeln, die eine Glasfaserlänge von kleiner 2.0 mm, vorzugsweise von 1 bis 5 mm, aufweisen. Im Rahmen der Erfindung können die thermoplastischen Kunststoffe der Gruppe der Polyolefine neben den Glasfasern auch andere kunststoffübliche Additive aufweisen.

Wärmeleitfähigkeit bezeichnet im Rahmen der Erfindung den von der Temperatur abhängigen Proportionalitätsfaktor λ (lambda) in der Beziehung w = λ gradT, die zwischen der Wärmestromdichte w und dem die Wärmeleitung verursachenden Temperaturgradienten gradT gilt. Nach der herrschenden Lehre nimmt die Wärmeleitfähigkeit in starkem Maße zu, wenn einem Kunststoff eine Vollfaserfüllung einverleibt wird, weil die Wärmeleitfähigkeit solcher Fasern beachtlich größer ist als die des "reinen" Kunststoff-Werkstoffes. In der Praxis übliche Mischungsformeln erlauben für die Wärmeleitfähigkeit homogener isotroper Kunststoffe gute Prognosen. In diese Mischungsformeln geht die Wärmeleitfähigkeit des reinen Kunststoff-Werkstoffes, die Wärmeleitfähigkeit der Glasfasern, der Volumenanteil des reinen Kunststoffes und der Volumenanteil der Fasern sowie auch das Gesamtvolumen der Mischung ein. Die zu den Stoffwerten gehörende Wärmeleitfähigkeit entspricht derjenigen Wärmemenge, die im stationären Zustand in der Zeiteinheit durch eine Flächeneinheit einer Schicht von der Dicke einer Längeneinheit hindurchgeleitet wird, wenn der Temperaturunterschied zwischen beiden Oberflächen 1°K beträgt. Die Wärmeleitfähigkeit wird meist in W/mK gemessen, wobei W für Wärmemenge, m für Meter und K für Grad Kelvin steht. Für die Messung der Wärmeleitfähigkeit kennt die Praxis verschiedene Verfahren. Es handelt sich bei der Wärmeleitfähigkeit um eine skalare Größe, die in homogener isotroper Materie richtungsunabhängig ist. In einer Materie, die Inhomogenitäten und Anisotropien aufweist, ist sie richtungsabhängig.

Das Einmischen von Glasfasern in einen thermoplastischen Kunststoff verbessert die Festigkeit. Die Glasfasern sind Bewehrungs- und Verstärkungselemente. Sie erhöhen den Elastizitätsmodul in Abhängigkeit von der eingemischten Masse an Glasfasern. Sie erhöhen aber nach Maßgabe der eingemischten Masse an Glasfasern und nach Maßgabe ihrer wärmeleitfähigkeit auch die Wärmeleitfähigkeit der Profilstäbe, die aus dem thermoplastischen Kunststoff und den eingemischten Glasfasern bestehen, und zwar quer zur Profilstabachse, aber auch in Profilstablängsrichtung. Die Erhöhung der Wärmeleitfähigkeit stört in vielen Verwendungen, wo es auf hohe Festigkeit, aber auch auf gute Wärmedämmung ankommt. Nach der herrschenden Lehre sind insoweit stets Kompromisse erforderlich: Hat der thermoplastische Kunststoff eine hohe Festigkeit, anders ausgedrückt einen hohen Elastizitätsmodul, so kann er auch mit geringen Profilwanddicken hohe mechanische Beanspruchungen aufnehmen, sei es in Form von Zugbeanspruchungen, Druckbeanspruchungen, Biegungen oder Torsionsbeanspruchungen. Ist der hohe Elastizitätsmodul durch Einmischen von Glasfasern erzeugt worden, so erhöhen diese die Wärmeleitfähigkeit des Profilstabes im Sinne der schon beschriebenen Mischungszusammenhänge. Wird der Anteil an eingemischten Glasfasern herabgesetzt, so reduziert sich zwar die Wärmeleitfähigkeit, die Profilwanddicke muß jedoch zur Aufnahme noher mechanischer Beanspruchungen vergrößert werden. Um bei einem Kunststoffprofil, welches eine Einmischung von nichtmetallischen Fasern aufweist, die Wärmeleitfähigkeit zu verringern, ist es aus der DE 38 01 564 C2, von der die Erfindung ausgeht, bekannt in den Kunststoff hohle Fasern oder andere Hohlkörper einzubetten, die ihrerseits eine geringe Festigkeit aufweisen. Wenn so gearbeitet werden soll, daß eine Einbuße der Kunststoffformteile in bezug auf die Festigkeit nicht eintritt, können nur geringe Mengen der mineralischen Hohlkörper beigegeben werden und folglich ist auch nur eine geringe Reduzierung der Wärmeleitfähigkeit erreichbar. Auch insoweit muß also mit störenden Kompromissen gearbeitet werden. - Es versteht sich, daß in die Steifigkeit eines Profilstabes auch das Flächenträgheitsmoment seiner Querschnittsflächen eingeht. Die beschriebenen Phänomene sind jedoch überlagert.

Seit langem verlangt die Praxis nach Profilstäben aus thermoplastischem Kunststoff, die einen hohen Elastizitätsmodul und damit hohe Steifigkeit einerseits und eine geringe Wärmeleitfähigkeit andererseits aufweisen. Das technische Problem der Erfindung besteht darin, einen solchen Profilstab anzugeben.

Zur Lösung des technischen Problems ist der Profilstab der eingangs genannten Art dadurch gekennzeichnet, daß der Zahlenwert eines Leistungsquotienten $Q_L$, der aus E und λ gebildet ist, größer ist als 25.000

$$Q_L = E \, \lambda^{-1} \geqq 25.000 \ (NmK/mm^2W),$$

und daß durch den Gehalt an Glasfasern die Wärmeleitfähigkeit auf einen Wert von unter 0,30 W/mK eingestellt ist. Vorzugsweise liegt der Zahlenwert des vorstehend definierten Leistungsquotienten im Bereich von 30.000 bis 80.000 (NmK/mm$^2$W). Nach bevorzugter Ausführungsform der Erfindung liegt bei einem erfindungsgemäßen Profilstab der Gehalt an Glasfasern unter 50 Masse%. Vorzugsweise ist der Kunststoff so ausgewählt und durch die Beimischung der Glasfasern so eingerichtet, daß der Elastizitätsmodul E einen Wert von 3.000 bis 10.000 N/mm$^2$ aufweist. In der Ausführungsform für Zug- oder Druckbeanspruchungen wird in den Leistungsquotienten, der im Patentanspruch 1 erscheint, als Elastizitätsmodul der Zug-Elastizitätsmodul eingesetzt. In der Ausführungsform für Biegebeanspruchungen wird in den Leistungsquotienten, der im Patentanspruch 1 erscheint, als Elastizitätsmodul der Biege-Elastizitätsmodul eingesetzt.

Die Erfindung verwendet zur Lösung des zugrundeliegenden technischen Problems einen besonderen Werkstoff, nämlich einen thermoplastischen Kunststoff der Gruppe Polyolefine oder Mischungen davon. Dieser Werkstoff kann kunststoffübliche Additive, z.B. mineralische Füllstoffe, aufweisen. Die Erfindung geht von der überraschenden Tatsache aus, daß bei Verwendung eines Kunststoffes der Gruppe der Polyolefine die herrschende Lehre bereichsweise nicht gilt, nach der bei Beimengung von kunststoffüblichen Glasfasern zu einem thermoplastischen Kunststoff die Wärmeleitfähigkeit der Mischung ansteigt, weil die Glasfasern eine Wärmeleitfähigkeit aufweisen, die höher ist als die des thermoplastischen Kunststoffes und sich folglich in bezug auf die Wärmeleitfähigkeit ein Mischungswert einstellt, der höher ist als die Wärmeleitfähigkeit des reinen thermoplastischen Kunststoffes. Dieser Bereich, in dem gegenüber den Werten, die nach der herrschenden Lehre zu erwarten sind, die Wärmeleitfähigkeit gleichsam einbricht, ist definiert durch den für die Erfindung wesentlichen Leistungsquotienten $Q_L = E \lambda^{-1}$ , wenn dieser Leistungsquotient größer ist als 25.000, vorzugsweise im Bereich 30.000 bis 80.000 liegt, Dimension NmK/mm$^2$W.

Es ist bekannt, daß bei Profilstäben aus thermoplastischem Kunststoff die Bildung von Mikrorissen die Wärmeleitung reduzieren. Man stellt sich vor, daß Mikrorisse gleichsam den Wärmefluß unterbrechen. Um den im Rahmen der Erfindung wesentlichen und überraschenden Einbruch der Wärmeleitfähigkeit zu verstehen, kann angenommen werden, daß die in den Polyolefin-Kunststoff eingebrachten Fasern thermodynamisch ähnlich wirken wie Mikrorisse, wobei jedoch überraschenderweise eine störende Beeinträchtigung der Festigkeit nicht eintritt. Die in den Kunststoff der Gruppe der Polyolefine eingemischten Glasfasern bewirken vielmehr die übliche Festigkeitssteigerung. Das gilt auch für Dauerschwingungsbeanspruchungen.

Im Rahmen der Erfindung kann mit den verschiedensten Polyolefinen gearoeicet werden. Besonders ausgeprägt sind die erfindungsgemäßen überraschenden Effekte, wenn der Profilstab bezüglich der Kunststoffkomponente aus einem Polypropylen-Kunststoff oder aus einer Mischung von Polypropylen-Kunststoffen besteht. Besonders ausgeprägt sind die Effekte aber auch dann, wenn der Profilstab bezüglich der Kunststoffkomponente aus einem Cykloolefin-Copolymer oder Mischungen davon, unter Beimischung der Glasfasern, aufgebaut ist. Das gilt auch, wenn der thermoplastische Kunststoff aus einem Methylpenthen-Polymer olefinischen Ursprungs oder Mischungen davon besteht. Vorzugsweise besteht in diesem Zusammenhang der Profilstab bezüglich der Kunststoffkomponente aus einem 4-Methylpenthen-1-Polymer olefinischen Ursprungs.

Ein erfindungsgemäßer Profilstab kann für die verschiedensten Zwecke eingesetzt werden, bei denen es einerseits auf hohe Festigkeit und damit auf einem hohen Elastizitätsmodul und andererseits auf eine geringe Wärmeleitfähigkeit ankommt. Besondere Verwendungen sind in den Patentansprüchen 10 bis 13 aufgeführt.

Gegenstand der Erfindung ist auch ein Verfahren zur Herstellung eines Profilstabes des besonderen Aufbaus, wobei die Mischung aus dem thermoplastischen Kunststoff der Gruppe Polyolefine und den Glasfasern mit einem Extruder aufbereitet wird. Hier besteht die Erfindung darin, daß die Mischung mit Hilfe einer Kühldüse zu dem Profilstab extrudiert wird. Das Kühldüsenextrusionsverfahren ist an sich bekannt (vgl. Michaeli "Extrusionswerkzeuge für Kunststoff und Kautschuk" Hanser-Verlag 1991, S. 342 bis 345). Auf eine einfache Formel gebracht ist dieses Kühldüsenextrusionsverfahren dadurch gekennzeichnet, daß die formgebenden Düsen, die die Innenwand und die Außenwand der Profile definieren, gekühlt sind. Das bewirkt zunächst eine intensive Kühlung der 3ereiche des Kunststoffstranges, der mit den gekühlten Werkzeugwänden in Kontakt kommt. Es entsteht gleichsam eine ausreichend standfeste Schale. Im Innern der Schale wird der noch flüssige Kunststoff nachgedrückt. Auf diese Weise wird erreicht, daß die im Wege der Kühldüsenextrusion hergestellten Profile sehr toleranzarm und mit hoher Oberflächenqualität das Werkzeug verlassen. Überraschenderweise zeigen nach der Lehre der Erfindung eingerichtete Profilstäbe, die im Wege der Kühldüsenextrusion hergestellt sind, den beschriebenen Einbruch der Wärmeleitfähigkeit oesonders ausgeprägt.

Im folgenden wird die Erfindung anhand einer lediglich ein Ausführungsbeispiel darstellenden Zeichnung ausführlicher erläutert. Es zeigen

Fig. 1     ein nach der Lehre der Erfindung hergestelltes Kunststoffprofil im Schnitt und in Seitenansicht,

Fig. 2     eine grafische Darstellung, die die Lehre der Erfindung erläutert.

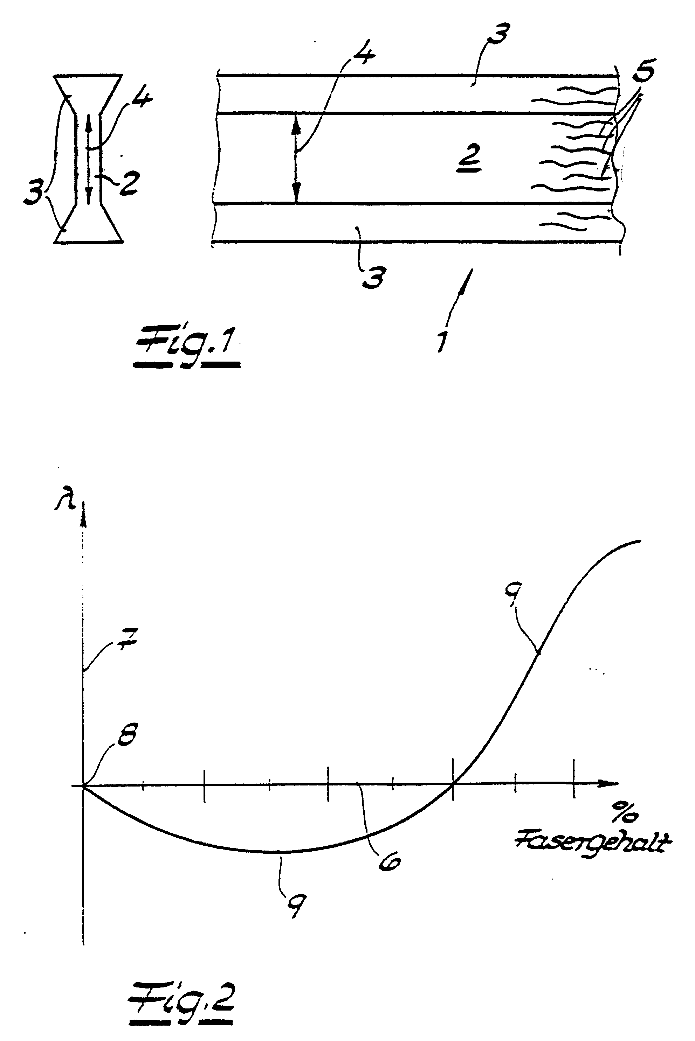

In der Fig. 1 erkennt man die Geometrie eines Kunststoffprofilstabes in Form eines typischen Wärmedämmprofils 1, wie es z.B. als Isoliersteg für Aluminiumfenster, Aluminiumtüren u. dgl. eingesetzt wird. Es besteht aus einem Stegteil 2 und zwei im Querschnitt keilförmigen Profilflanschen 3. Die Festigkeit des Wärmedämmprofils 1 in bezug auf Biegung, Schlagbeanspruchungen sowie in bezug auf Dauerfestigkeit u. dgl. soll möglichst hoch sein, der Wärmefluß in Richtung des in Fig. 1 eingezeichneten Doppelpfeiles 4 soll möglichst gering sein, d.h. zumindest in dieser Richtung soll die Wärmeleitfähigkeit klein sein. Wird diese Forderung erfüllt, so ist die Wärmeleitfähigkeit auch in Längsrichtung des Profilstabes klein.

Für die Erfindung ist, wie dargelegt wurde, erheblich, daß gegenüber den Prognosen, die die herrschende Lehre für die Mischung aus thermoplastischen Kunststoffen und Glasfasern erlaubt, gleichsam ein Einbruch der Wärmeleitfähigkeit erreicht wird. Diese Zusammenhänge werden anhand der Fig. 1 im folgenden erläutert: Das in Fig. 1 gezeichnete Wärmedämmprofil 1 möge aus einem Kunststoff der Gruppe Polyolefine, der eingemischte Fasern oder sonstige Füllstoffe nicht aufweist, geformt sein. An diesem Kunststoffprofil wurde quer zur Längserstreckung die Wärmeleitfähigkeit mit einem üblichen Verfahren gemessen und als Bezugsgröße festgehalten. Danach wurde eine Mehrzahl von Vergleichsprofilen hergestellt, deren Geometrie mit der Geometrie des in Fig. 1 dargestellten Wärmedämmprofils 1 übereinstimmte. Diese Vergleichsprofile wurden alle mit den gleichen kunststoffüblichen Fasern 5 versetzt, wie es die Fig. 1 schematisch andeutet, jedoch mit unterschiedlichen Masse% der Beigabe, und zwar in steigender Reihe. Es mag sich um eine steigende Reihe mit 5, 10, 15, 20, 25, 30, 35 und 40 Masse% handeln. Auch an den so hergestellten Vergleichsprofilen wurde die Wärmeleitfähigkeit quer zur Längserstreckung gemessen. Die gemessenen Werte wurden den unterschiedlichen Masse% der kunststoffüblichen Fasern 5 zugeordnet.

In der Fig. 2 sind im Rahmen einer qualitativen Darstellung diese Masse% auf der Abszissenachse 6 aufgetragen, die gemessene Wärmeleitfähigkeit λ auf der Ordinatenachse 7. Der Kreuzungspunkt 8 zwischen der Abszissenachse 6 und der Ordinatenachse 7 ist derjenige, der auf der Ordinatenachse 7 die Wärmeleitfähigkeit des Kunststoffprofils aus reinem Kunststoff aufzeigt. Überraschenderweise folgt jedoch , wie die Kurve 9 zeigt, danach ein Einbruch der Wärmeleitfähigkeit auf Werte unterhalb der Wärmeleitfähigkeit, die für das aus dem reinen Kunststoff geformte Kunststoffprofil gleicher Geometrie gilt. Die eingetragenen Zahlen lassen erkennen, daß der Einbruch der Wärmeleitfähigkeit beachtlich ist, - bis er im Beispiel bei einem Wert von unter 50 Masse% der beigemischten Glasfasern wieder den Wert des Kunststoffprofils erreicht, welches aus dem reinen Kunststoff hergestellt wurde. Gleichzeitig steigt die mechanische Festigkeit des Profils mehr oder weniger proportional mit den steigenden Masse% der in den Kunststoff eingemischten Glasfasern.

Ausführungsbeispiel:

Das Ausführungsbeispiel wurde mit Hilfe eines Profilstabes aus einem Polyolefin erarbeitet, wie er in Fig. 1 dargestellt wurde. Die Tabelle enthält die zu dem Ausführungsbeispiel gehörenden Parameter und die erarbeiteten Zahlenwerte

| Werkstoff | E-Modul | Wärmeleitfähigkeit |
|---|---|---|
| 1.1) PA 66 | 1200-1700 | 0,27 |
| 1.2) PA 66; GF30% | 7500 | 0,32 |
| | | |
| 2.1) PP | 1100-1600 | 0,22 |
| 2.2) PP; GF30% | 6000-6500 | 0,12 |
| | | |
| 3.1) TPX | 1300 | |
| 3.2) TPX; GF30% | 5500 | 0,11 |
| | | |
| 4.1) COC | 3200 | |
| 4.2) COC; GF30% | 8000 | 0,10 |
| E λ$^{-1}$ | PA 66; GF30% | PP; GF30% |
| | 20.000 | 40.000 |
| | | |
| | TPX; GF30% | COC; GF30% |
| | 50.000 | 80.000 |

In der Tabelle bezeichnet PA Polyamid, PP Polypropylen, TPX Methylpenthen-Polymer, COC Cykloolefin-Copolymer. GF steht für Glasfasern, die Zahl vor GF gibt die eingemischten Masse% an. In der Tabelle erkennt man in den Zeilen 1.1), 2.1), 3.1) und 4.1) den E-Modul der glasfaserfreien Kunststoffe und die dazu gemessenen Wärmeleitfähigkeiten. In den Zeilen 1.2), 2.2), 3.2) und 4.2) erkennt man den E-Modul der Mischungen mit dem angegebenen Gehalt an Glasfasern. Als letzte Zeile der Tabelle ist der Leistungsfaktor $E \lambda^{-1}$ für die Profile mit Glasfaserbeimischung angegeben. PA ist kein Polyolefin. Der Leistungsfaktor liegt bei 20.000. Demgegenüber zeigt sich bei PP ein Leistungsfaktor von 40.000, bei TPX ein Leistungsfaktor von 50.000 und bei COC ein Leistungsfaktor von 80.000. Die nach der herrschenden Lehre über Mischungsformeln errechnete Wärmeleitfähigkeit liegt im Vergleich zu den Werten, die zu 2.2), 3.2) und 4.2) angegeben wurden, um einen Faktor von 1,5 bis 2,5 höher.

**Patentansprüche**

1. Durch Strangpressen mit Hilfe eines Extruders hergestellter Profilstab (1) aus einem thermoplastischen Kunststoff der Gruppe Polyolefine mit eingemischten Glasfasern (5), welcher Profilstab (1), gemessen mit den eingemischten Glasfasern (5), einen hohen Elastizitätsmodul E (N/mm$^2$) und quer zur Profilstabachse eine geringe Wärmeleitfähigkeit $\lambda$ (W/mK) aufweist, dadurch gekennzeichnet, daß der Zahlenwert eines Leistungsquotienten $Q_L$, der aus E und $\lambda$ gebildet ist, größer ist als 25.000,

$$Q_L = E \lambda^{-1} \geqq 25.000 \ (NmK/mm^2W),$$

und daß durch den Gehalt an Glasfasern (5) die Wärmeleitfähigkeit auf einen Wert von unter 0,30 W/mK eingestellt ist.

2. Profilstab nach Anspruch 1, dadurch gekennzeichnet, daß der Gehalt an Glasfasern (5) unter 50 Masse% liegt.

3. Profilstab nach einem der Ansprüche 1 oder 2, dadurch gekennzeichnet, daß der Elastizitätsmodul E einen Wert von 3.000 bis 10.000 N/mm$^2$ aufweist.

4. Profilstab nach einem der Ansprüche 1 bis 3 in der Ausführungsform für Zug- oder Druckbeanspruchungen, dadurch gekennzeichnet, daß in dem Leistungsquotienten als Elastizitätsmodul der Zug-Elastizitätsmodul eingesetzt ist.

5. Profilstab nach einem der Ansprüche 1 bis 3 in der Ausführungsform für Biegebeanspruchungen, dadurch gekennzeichnet, daß in dem Leistungsquotienten als Elastizitätsmodul der Biegeelastizitätsmodul eingesetzt ist.

6. Profilstab nach einem der Ansprüche 1 bis 5, dadurch gekennzeichnet, daß der Kunststoffanteil aus einem Polypropylen-Kunststoff oder aus einer Mischung von Polypropylen-Kunststoffen besteht.

7. Profilstab nach einem der Ansprüche 1 bis 5, dadurch gekennzeichnet, daß der Kunststoffanteil aus einem Cykloolefin-Copolymer oder Mischungen davon besteht.

8. Profilstab nach einem der Ansprüche 1 bis 5, dadurch gekennzeichnet, daß der Kunststoffanteil aus einem Methylpenthen-Polymer olefinischen Ursprungs oder Mischungen davon besteht.

9. Profilstab nach Anspruch 8, dadurch gekennzeichnet, daß der Kunststoffanteil aus einem 4-Methylpenthen-l-Polymer olefinischen Ursprungs oder Mischungen davon besteht.

10. Profilstab nach einem der Ansprüche 1 bis 9, dadurch gekennzeichnet, daß er als Wärmedämmprofil verwendet ist.

11. Profilstab nach Anspruch 10, dadurch gekennzeichnet, daß er als wärmedämmendes Fenster-, Tür- und Fassadenprofil verwendet ist.

12. Profilstab nach Anspruch 10, dadurch gekennzeichnet, daß er als wärmedämmendes Glasabstandshalterprofil für Isoliergals, Isolierstege für Aluminiumfenster und Aluminiumtüren sowie für Aluminiumfassaden verwendet ist.

13. Profilstab nach Anspruch 10, dadurch gekennzeichnet, daß er als wärmedämmendes Zubehörteil in Aluminiumfenstern zur Unterbrechung des Wärmeüberganges verwendet ist.

**14.** Verfahren zur Herstellung eines Profilstabes nach einem der Ansprüche 1 bis 9, wobei die Mischung aus dem thermoplastischen Kunststoff der Gruppe Polyolefine und den Glasfasern (5) in einem Extruder aufbereitet wird, dadurch gekennzeichnet, daß die Mischung mit Hilfe einer Kühldüse zu dem Profilstab (1) extrudiert wird.

**Claims**

**1.** A sectional bar (1) which is produced by means of an extruder from a synthetic thermoplastic material of the polyolefine group comprising admixed glass fibres (5), which sectional bar (1), as measured with the admixed glass fibres (5), has a high modulus of elasticity E (N/mm$^2$) and a low thermal conductivity $\lambda$ (W/mK) transverse to the axis of the sectional bar, characterised in that the numerical value of a performance quotient $Q_L$ which is formed from E and $\lambda$ is greater than 25,000,

$$Q_L = E\,\lambda^{-1} \geqq 25{,}000\ (\text{NmK/mm}^2\text{W}),$$

and that the thermal conductivity is adjusted to a value less than 0.30 W/mK by the content of glass fibres (5).

**2.** A sectional bar according to claim 1, characterised in that the content of glass fibres (5) is less than 50 % by weight.

**3.** A sectional bar according to either one of claims 1 or 2, characterised in that the modulus of elasticity E has a value of 3000 to 10,000 N/mm$^2$.

**4.** A sectional bar according to any one of claims 1 to 3 in its form of construction for tensile or compressive stresses, characterised in that the modulus of elasticity in tension is used as the modulus of elasticity in the performance quotient.

**5.** A sectional bar according to any one of claims 1 to 3 in its form of construction for bending stresses, characterised in that the modulus of elasticity in bending is used as the modulus of elasticity in the performance quotient.

**6.** A sectional bar according to any one of claims 1 to 5, characterised in that the synthetic material constituent consists of a polypropylene synthetic material or of a mixture of polypropylene synthetic materials.

**7.** A sectional bar according to any one of claims 1 to 5, characterised in that the synthetic material constituent consists of a cycloolefine copolymer or of mixtures thereof.

**8.** A sectional bar according to any one of claims 1 to 5, characterised in that the synthetic material constituent consists of a methylpentene polymer of olefinic origin or of mixtures thereof.

**9.** A sectional bar according to claim 8, characterised in that the synthetic material constituent consists of a 4-methyl-1-pentene polymer of olefinic origin or of mixtures thereof.

**10.** A sectional bar according to any one of claims 1 to 9, characterised in that it is used as a thermal insulation section.

**11.** A sectional bar according to claim 10, characterised in that it is used as a thermally insulating window, door or facade section.

**12.** A sectional bar according to claim 10, characterised in that it is used as a thermally insulating glass spacer section for insulating glass, insulating bars for aluminium windows and aluminium doors, and for aluminium facades.

**13.** A sectional bar according to claim 10, characterised in that it is used as a thermally insulating accessory component for interrupting heat transfer in aluminium windows.

**14.** A process for producing a sectional bar according to any one of claims 1 to 9, wherein the mixture comprising the thermoplastic synthetic material of the polyolefine group and the glass fibres (5) is processed in an extruder, characterised in that the mixture is extruded to form the sectional bar (1) by means of a cooling die.

**Revendications**

1. Barre profilée (1) fabriquée par extrusion à l'aide d'une extrudeuse à partir de matière thermoplastique du groupe des polyoléfines avec des fibres de verre incorporées (5), ladite barre profilée (1), mesurée avec les fibres de verre incorporées (5), présentant un module d'élasticité E (N/mm$^2$) élevé et, transversalement à l'axe de la barre profilée, une conductibilité thermique λ (W/mK) faible, caractérisée en ce que la valeur numérique du quotient de débit $Q_L$, formé à partir de E et de λ, est supérieure à 25 000,

$$Q_L = E\,\lambda^{-1} \geq 25\ 000\ (NmK/mm^2 W),$$

et en ce que la conductibilité thermique est calée sur une valeur inférieure à 0,30 W/mK en jouant sur la teneur en fibres de verre (5).

2. Barre profilée selon la revendication 1, caractérisée en ce que la teneur en fibres de verre (5) est inférieure à 50 % en poids.

3. Barre profilée selon l'une des revendications 1 ou 2, caractérisée en ce que le module d'élasticité E possède une valeur de 3 000 à 10 000 N/mm$^2$.

4. Barre profilée selon l'une des revendications 1 à 3 conçue pour des contraintes de traction ou de compression, caractérisée en ce que le module d'élasticité introduit dans le calcul du quotient de débit est le module d'élasticité en traction.

5. Barre profilée selon l'une des revendications 1 à 3 conçue pour des contraintes de flexion, caractérisée en ce que le module d'élasticité introduit dans le calcul du quotient de débit est le module d'élasticité en flexion.

6. Barre profilée selon l'une des revendications 1 à 5, caractérisée en ce que la fraction de matière plastique est constituée de matière plastique polypropylène ou d'un mélange de matières plastiques polypropylènes.

7. Barre profilée selon l'une des revendications 1 à 5, caractérisée en ce que la fraction de matière plastique est constituée d'un copolymère cyclooléfine ou de mélanges de telles substances.

8. Barre profilée selon l'une des revendications 1 à 5, caractérisée en ce que la fraction de matière plastique est constituée d'un polymère méthylpentène d'origine oléfinique ou de mélanges de telles substances.

9. Barre profilée selon la revendication 8, caractérisée en ce que la fraction de matière plastique est constituée d'un polymère 4-méthylpentène-1 d'origine oléfinique ou de mélanges de telles substances.

10. Barre profilée selon l'une des revendications 1 à 9, caractérisée en ce qu'elle est employée comme profilé de calorifugeage.

11. Barre profilée selon la revendication 10, caractérisée en ce qu'elle est employée comme profilé calorifuge de fenêtres, de portes et de façades.

12. Barre profilée selon la revendication 10, caractérisée en ce qu'elle est employée comme profilé calorifuge d'écartement de vitres pour du vitrage isolant, et comme baguette isolante pour des fenêtres en aluminium et des portes en aluminium ainsi que pour des façades en aluminium.

13. Barre profilée selon la revendication 10, caractérisée en ce qu'elle est employée comme accessoire calorifuge dans des fenêtres en aluminium pour interrompre la transmission thermique.

14. Procédé de fabrication d'une barre profilée selon l'une des revendications 1 à 9, dans lequel le mélange de la matière thermoplastique du groupe des polyoléfines et des fibres de verre (5) est préparé dans une extrudeuse, caractérisé en ce que le mélange est extrudé sous forme de barre profilée (1) à l'aide d'une filière froide.

_Fig.1_

_Fig.2_